# EUROPEAN PATENT SPECIFICATION

(11) **EP 1 378 343 B1**
(45) Date of publication and mention of the grant of the patent: **30.08.2017**
(21) Application number: 03254247.4
(22) Date of filing: 03.07.2003
(51) Int. Cl.: B32B 5/20, B32B 5/18, B29C 44/12, B32B 38/00, B29C 44/06

(54) **Foamed resin laminate sound insulation board and method for manufacturing the same**
Mit einem Laminat aus geschäumten Harz versehene schalldämmende Platte und Verfahren zur Herstellung derselben
Panneau d'isolation acoustique en stratifié de résine expansée et son procédé de fabrication

(30) Priority: 05.07.2002 JP 2002197254
(43) Date of publication of application: 07.01.2004
(73) Proprietor: Kabushiki Kaisha Kobe Seiko Sho (Kobe Steel, Ltd.), Kobe-shi, Hyogo 651-8585 (JP)
(72) Inventor: Sugimoto, Akio, Kobe Corporate Research Lab., Nishi-ku, Kobe-shi, Hyogo 651-2271 (JP); Nakanishi, Hironobu, c/o Kobe Corporate Res. Labs., Nishi-ku, Kobe-shi, Hyogo 651-2271 (JP)
(74) Representative: Hancox, Jonathan Christopher

(56) References cited:
- EP-A- 0 490 389
- WO-A-00/46017
- DE-A- 2 437 238
- DE-A- 2 658 379
- DE-A- 2 751 816
- US-A- 4 734 323
- US-A- 4 830 908
- DATABASE WPI Section Ch, Week 199403 Derwent Publications Ltd., London, GB; Class A14, AN 1994-022406 XP002261644 & JP 05 329973 A (GEON KASEI KK) 14 December 1993 (1993-12-14)

## Description

The present invention relates to a laminated board comprising a foamed resin between two hard plates.

Conventionally, various structures have been proposed as a laminate sound insulation board for giving damping performance and sound insulating performance to a hard plate of metal, industrial plastics or the like.

For example, in a constraining type vibration damping structure in which a vibrating damping material is put between the hard plate and a constraining plate having bending rigidity equal to the hard plate to form a laminated plate, the laminated plate is manufactured by laminating the hard plate and the constraining plate so that the vibration damping material is interposed between them, and mutually adhering the members in this state by heating or pressurization to integrate them. This laminated plate is then made into a prescribed shape by plastic forming such as press work.

In the above-mentioned constraining type vibration damping structure, conventionally, a metal or the like has been used as the constraining plate, but the use of a polymer material such as resin is desired because the manufacture is facilitated, and a low cost can be realized. However, when the elastic modulus of the polymer material such as resin is increased to obtain the rigidity equal to the hard plate, the elongation is deteriorated to impair the moldability. Therefore, in the use of the resin or the like as a retaining plate, the vibration damping material and the plate must be adhered in the above manufacturing process after the hard plate is pressed into a prescribed shape.

On the other hand, in a vibration damping structure in which a constraining or unconstraining (free) type vibration damping material is stuck to the hard plate to form a laminated plate, sticking of a vibration damping material having a thickness about 1-2 times the plate thickness of the hard plate is needed to enhance the vibration damping performance when a resin or the like as the vibration damping material. If the press work of the laminated plate is carried out in the state where the vibration damping material is stuck thereto, the shape and dimensional precision after press work is seriously impaired. In this case, therefore, the work for sticking the vibration damping material is carried out after the hard plate is pressed into the prescribed shape.

However, the above-mentioned conventional laminated plates of both the structures have the problem that the applicable place or shape is restricted because the resin is adhered after pressing the hard plate into the prescribed shape.

The conventional laminated plates further have the problem that the large thickness as the whole laminated place makes it extremely difficult to press into a prescribed shape after constituting the laminated plate.

In the manufacturing process of an automobile, for example, the the resin as the vibration damping material is set in a prescribed position in the middle of assembling process after the hard plate is made into a prescribed shape by press work, and thermally fused by the heating of the following baking finish process and the dead weight of the vibration damping material. Therefore, the applicable position of the resin is limited to the bottom upper surface, and it is difficult to apply the vibration damping material to the side surface or roof reverse side. Further, since the resin is pressed and adhered by the dead weight, the adhesive force is weakened when the weight of the resin is reduced.

US 4830908A discloses a vehicle outer panel structure with heat-insulation properties. The vehicle outer panel structure is produced by first laminating first, second and third layers to form a laminated sheet. The first layer is formed of a resin composition capable of foaming and including vinyl chloride resin, plasticizer, foaming agent, epoxy resin, hardener for the epoxy resin. The second layer is formed of fiber cloth. The third layer is formed of metallic film having a thickness not more than 50 mµ. The first, second and third layers are stuck with each other so that the second layer is interposed between the first and third layers. Subsequently, the thus formed laminated sheet is stuck to the back side of a vehicle outer panel, and thereafter heated so that the resin composition of the laminated sheet is foamed and hardened.

WO 00/46017A relates to a method of reinforcing a structural part by extruding a thermally expandable resin layer as a layer on the surface of a release liner; placing a sheet carrier, such as a metal sheet, on the resin to form a laminate; die cutting the laminate; placing the laminate on a part with a non-planar geometry; conforming the laminate; and thermally expanding and bonding the resin to the non-planar part.

EP 0490389A relates to a sheet shaped-product comprising a sheet-like open cell plastic foam having a skin layer consisting of a foamable thermosetting resin on and in one or both surfaces.

The sheet shaped-product is produced by applying a composition consisting essentially of a foamable thermosetting resin onto one or both of the surfaces of a sheet-like open cell plastic foam, so that one or both of the surfaces is/are impregnated with the composition; optionally subjecting the impregnated plastic foam to a thermal treatment; and subjecting the resulting material to a hot pressing while foaming the foamable layers.

More specifically, the skin layer is bonded in a partially incorporated manner to the plastic foam. The plastic foam is a polyurethane foam, a silicone foam or a melamine foam. The foamable thermosetting resin is a polycarbodiimide resin. The sheet shaped-product is stampable and can be used to prepare a sound-absorbing and heat insulating material.

DE 2658379A relates to a sandwich structure. The core material layer is coated on both sides and is used for insulation and noise damping, for example in doors and furniture. The core layer is placed on a layer of a foamable material which is foamed at a later stage. The latter in turn is placed on a first covering layer, so that the structure comprises: cover layer (eg metal)/foamble layer/core layer/second foamable layer/second cover layer.

The second covering layer on which the second foamable layer is applied, is placed on the core layer. The starting times of the foamed expanding materials are selected to be such that their reaction will start only after reaching a press. The press is used for controlling the thickness of the final product, and a sandwich structure is first formed comprising the above mentioned layers, and the foaming occurs at a later stage in the press.

### SUMMARY OF THE INVENTION

In consideration of the above problems, the present invention thus has an object to provide a method According to claim 1.
Fig. 1 is a schematic structural view of a first reference foamed resin laminate sound insulation board wherein (a) shows the state where a foamable resin is in an unfoamed state, and (b) shows the state where the foamable resin is made to a foamed resin.
Fig. 2 is a schematic structural view of a second reference foamed resin laminate sound insulation board wherein (a) shows the state where a foamable resin is in an unfoamed state, and (b) shows the state where the foamable resin is made to a foamed resin.
Fig. 3 is a schematic structural view for d'escribing a reference manufacturing method
Fig. 4 is a schematic structural view of a foamed resin laminate sound insulation board according to an embodiment of the present invention, wherein (a) shows the state where a foamable resin is in an unfoamed state, and (b) shows the state where the foamable resin is made into a foamed resin.

Preferred embodiments of the present invention are further described in reference to accompanying drawings.

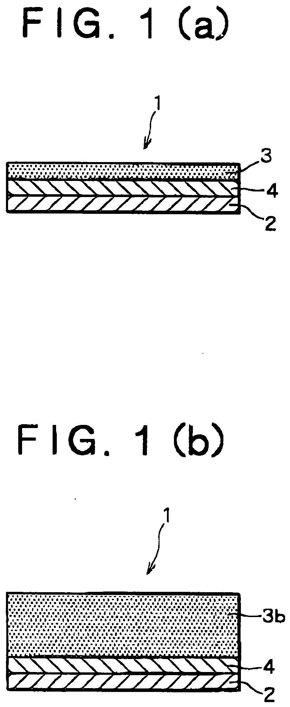

The schematic view of a reference foamed resin laminate sound insulation board 1 is shown in Fig. 1. This foamed resin laminate sound insulation board 1 comprises, as shown in Fig. 1(a), a foamable resin 3a to be foamed by heating to a foaming temperature, a non-foamable resin 4 not foamable even by heating, and a highly rigid hard plate 2 (e.g., steel plate, aluminum alloy plate, etc.), which are laminated and integrated in this order.

In the foamed resin laminate sound insulation board 1, the foamable resin 3a and the non-foamable resin 4, and the non-foamable resin 4 and the hard plate 2 are thermally fused and adhered to each other by heating and pressurizing, respectively. The temperature of the thermal fusion is set lower than the foaming temperature of the foamable resin 3a, preferably, the melting point of the foamable resin 3a. The adhering method is not limited by thermal fusion, and the adhesion may be carried out, for example, by applying an adhesive followed by pressurization.

Since the foamed resin laminate sound insulation board 1 is heated at a temperature lower than the foaming temperature of the foamable resin 3a, preferably, a temperature lower than the melting point of the foamable resin 3a, the laminated plate is formed while the unfoamed state is held. This foamed resin laminate sound insulation board 1 is heated to the foaming temperature to make the foamable resin 3a to a foamed resin 3b, as shown in Fig. 1(b), whereby the thickness can be increased.

In the above structure, since the whole laminated plate can be thinned if the foamable resin 3a is held in the unfoamed state, the foamed resin laminate sound insulation board 1 can be formed into a prescribed shape by working (plastic forming, e.g., press work, bending work, etc.). Accordingly, the foamed resin laminate sound insulation board 1 can be worked into a prescribed shape while ensuring the dimensional and shape precision without restrictions of shape, applicable place and weight. Further, the thickness of the foamable resin 3a is increased by foaming, whereby the rigidity imparting affect can be enhanced, so that the role of the constraining plate of the constraining type vibration damping structure can be sufficiently played. Consequently, the vibration damping performance can be enhanced.

When a metal powder is added to the foamable resin 3a the sound insulating performance can be enhanced because the density of the resin 3a is increased, and when a conductive material is used, the weldability can be improved. When a lubricant is added to the foamable resin 3a, the contact friction with a metal mold in press molding can be reduced to prevent the rupture of the resin. The same effect can be obtained also by sticking a film exclusive for lubrication to the surface of the foamable resin 3a or applying a coating for lubrication thereto.

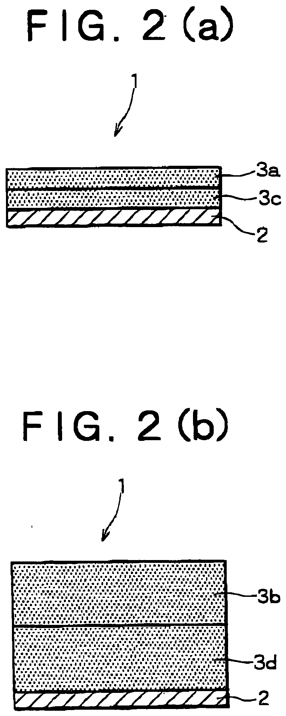

The schematic view of a second reference foamed resin laminate sound insulation board 1 is shown in Fig .2. The foamed resin laminate sound insulation board 1 comprises, as shown in Fig. 2(a), a first foamable resin 3a to be foamed by heating to a foaming temperature, a second foamable resin 3c differed in foaming temperature from the first foamable resin 3a, and a highly rigid hard plate 2, which are laminated and integrated in this order.

In this foamed resin laminate sound insulation board 1, the first foamable resin 3a and the second foamable resin 3c, and the second formable resin 3c and the hard plate 2 are thermally fused and adhered to each other by heating and pressurizing, respectively. The temperature of the thermal fusion is set lower than the forming temperature. The adhering method is not limited by thermal fusion, and the adhesion may be carried out by applying, for example, an adhesive followed by pressurization.

Since the foamed resin laminate sound insulation board 1 is heated and thermally fused at a temperature lower than the foaming temperatures of the first foamable resin 3a and the second foamable resin 3c, the laminated plate is formed while the unfoamed state is held. The foamed resin laminate sound insulation board 1 is then heated to the foaming temperature to make the first foamable resin 3a and the first formable resin 3b to a first foamed resin 3c and a second foamed resin 3d, respectively, as shown in Fig. 2(b), whereby the thickness can be increased.

At this time, the foaming temperatures of the first foamable resin 3a and the second foamable resin 3c are set so that the foaming temperature of the second foamable resin 3c is lower than that of the first foamable resin 3a. The melting point of the second foamable resin 3c is set lower than that of the first foamable resin 3a. Accordingly, the first and second foamable resins can be independently foamed: For example, only the second foamable resin 3c is made into the foamed resin 3d at a certain heating temperature, and the first foamable resin 3a is then made to the foamed resin 3b at a higher heating temperature. The heating temperature for adhering the second foamable resin 3c to the hard plate 2 is preferably set to the foaming temperature capable of foaming the second foamable resin 3c. In the use of a thermosetting resin as then second foamable resin 3c, for example, even if the second foamable resin 3c is foamed by heating, and the first foamable resin 3a and the second foamable resin 3c are then heated to the foaming temperature, the softening/fusing or new foaming of the second foamable resin 3c which is made into the foamed resin 3d is never caused. Accordingly, the first foamable resin 3a and the second foamable resin 3c can be integrally held integrated as the foamed resin laminate sound insulation board without being dropped out from the hard plate 2.

It is also preferable to differ not the foaming temperature but the melting point between the first foamable resin and the second foamable resin. In this case, the melting points of the first foamable resin 3a and the second foamable resin 3c are set so that the melting point of the second foamable resin 3c is higher than that of the first foamable resin 3a. The second foamable resin 3c is laminated first on the hard plate, and the first foamable resin 3a is then laminated and adhered by heating. In the use of a thermosetting resin as the second foamable resin 3c, for example, the second foamable resin 3c is never softened even if heated, and the softening/fusing of the second foamable resin 3c which is made into the foamed resin 3d is never caused even if the first foamable resin 3a and the second foamable resin 3c are then heated to the foaming temperature. Accordingly, the first foamable resin 3a and the second foamable resin 3c can be integrally held as the foamed resin laminate sound insulation board without being dropping out from the hard plate 2.

Further, The rigidity imparting effect is enhanced by increasing the thickness of the first foamable resin 3a by foaming, and the conversion efficiency to thermal energy accompanied by shear deformation of the second foamed resin is enhanced by increasing the viscosity of the second foamable resin 3c and reducing the equivalent elastic modulus in the foamed resin state, whereby an excellent constraining type vibration damping structure can be provided.

In the above structure, if the first foamable resin 3a and the second foamable resin 3c are held in the unfoamed state, the foamed resin laminate sound insulation board 1 can be made into a desired shape by press work because the thickness of the whole laminated plate is small. Therefore, the foamed resin laminate sound insulation board 1 can be pressed into the prescribed shape while ensuring the dimensional and shape precision without restrictions of shape, applicable place and weight. Further, the rigidity imparting effect can be enhaced by increasing the thickness of the first foamable resin 3a, so that the role of the constraining plate of the constraining type vibration damping structure can be sufficiently played. Consequently, the vibration damping performance can be enhanced.

When the loss fac or of the second foamable resin 3c after foaming is set to 0.05-5, vibration energy can be sufficiently absorbed, and high damping performance can be obtained as the constraining type vibration damping structure. When a resin capable of forming closed cells by heating is used as the first foamable resin 3a and the second foamable resin 3c, the reduction in equivalent elastic modulus can be confined to a reduction inversely proportional to one power of the foaming magnification even if foamed at a high magnification.

When a resin capable of forming open cells by heating is used as the first foamable resin 3a and the second foamable resin 3c, the equivalent elastic modulus can be remarkably reduced to provide an excellent constraining type vibration damping structure. In addition to this, the foaming magnification is adjusted to form a foamed resin having open cells, whereby sound absorbing property can be given, and the sound absorbing performance can be thus enhanced in a wide frequency range.

In addition, the sound isolation board with the optimal sound absorbing performance according to the purpose can be obtained by adjusting the foaming magnification of the first foamable resin and the second foamable resin, using the resin which can form open cells as the first formable resin which can be foamed by heating.

When a metal power is added to the first foamable resin 3a or the second foamable resin 3c, the sound insulating performance can be enhanced because the density of the resin 3a, 3c is increased, and when a conductive material is used, the weldability can be improved. When a lubricant is added to the foamable resin 3a, the contact friction with a metal mold can be reduced in press molding to prevent the rupture of the resin. The same effect can be obtained also by sticking a film exclusive for lubrication to the surface of the foamable resin 3a or applying a coating for lubrication thereto.

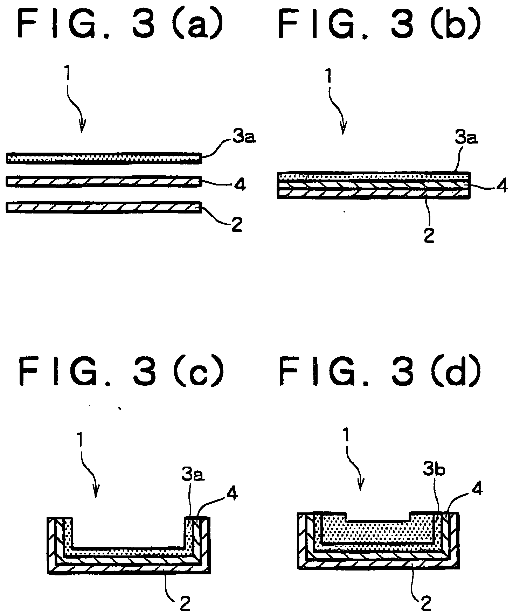

The manufacturing process of the foamed resin laminate sound insulation board 1 will be then described in reference to Figs. 3(a)-(d).

A foamable resin film is formed first. Materials for constituting the formable resin 3a are mixed. The materials include a resin and a foaming agent, and a material for imparting adhesive strength, damping strength or lubricating property or a metal powder is added thereto as occasion demands. These materials are sufficiently kneaded, and then sheeted into a foamable resin film, which is then wound in a coil shape.

The melting point of the resin included in the materials is preferably set lower than the decomposing temperature of the foaming agent by 20-30°C. By doing this, the foaming can be prevented even if the temperature of the resin is raised by the mixing.

A non-foamable resin film is then formed. Materials for constituting the non-foamable resin 4 are mixed. The materials include a resin, and a material for imparting adhesive strength, damping strength or lubricating property or a metal powder is added thereto as occasion demands. These materials are sufficiently kneaded and then sheeted into a non-foamable resin film, which is then wound in a coil shape.

The foamable resin film and the non-foamable resin film may be rolled in a coil shape after mutually stuck and integrated by thermal fusion or through an adhesive. In each case, the film foamable resin 3a can be coiled since it is in an unfoamed state with a small thickness. Therefore, the applicable place is not limited because the films can be carried in the coiled shapes and unwound from the coils in a construction site,

### (Laminating Process)

The non-foamable resin film and foamable resin film are unwound while unwinding the coiled hard plate 2, as shown in Fig. 3(a) to laminate the non-foamable resin 4, the foamable resin 3a and the hard plate 2.

### (Laminate Integrating Process)

These materials are heated in the laminated state, as shown in Fig. 3(b), and integrated by thermal fusion to form the foamed resin laminate sound insulation plate 1. At this time, pressurization may be carried out according to the heating. The adhering method is not limited to thermal fusion, and the adhesion and integration may be performed, for example, by applying an adhesive followed by pressurization.

The thermal fusing temperature of the foamable resin 3a and the non-foamable resin 4 is set lower than the foaming temperature. Therefore, the heating temperature for thermal fusion can be set lower than the foaming temperature, and the thermal fusion can be performed without causing the foaming of the foamable resin 3a even if heated.

It is unnecessary that the hard plate 2, the non-foamable resin film 4, and the foamable resin film 3a are integrated at the same time as described above. The integration may be performed by adhering the non-foamable resin film 4 to the hard plate 2, and then adhering the foamable resin film 3a to the non-foamable resin film 4. According to this, one laminating process can be more easily carried out because the films are unwound from two coils, than in the case when the films are unwound from three coils.

When the foamable resin film and the non-foamable resin film are coiled in one as a laminate integrated film, the formable resin film 3a and the non-foamable resin film 4 can be simultaneously laminated on the hard plate 2 by drawing them from two coils.

### (molding Process)

The thus-manufactured foamed resin laminate sound insulation board 1 precursor further pressed in the laminate integrated state and made into a prescribed shape as shown in Fig. 3(c). At this time, since the foamable resin 3a is in the unfoamed state, it is easy to press with a small thickness. Accordingly, the sound insulation board can be pressed into the prescribed shape while ensuring the dimensional and shape precision without restrictions of shape and applicable place as the laminated board. The molding process is not limited to press work, and plastic forming such as bending work can be adapted. When requiring no working as the application in a flat shape, this process may be omitted.

### (Heating Process)

The foamable resin 3a is foamed and made into the foamed resin 3b by heating to the foaming temperature as shown in Fig. 3 (d). The foamable resin 3a is made into the foamed resin 3b and increased in thickness, whereby the bending rigidity can be enhanced.

The foamable resin 3a is preferably a thermoplastic resin. When the foamed resin laminate sound insulation board 1 precursor is heated to the foaming temperature, the softening of the foamable resin 3a is thus progressed simultaneously with decomposition and gas generation, and the foaming can be sufficiently performed. Alternatively, the foamable resin 3a may be a thermosetting resin. In the combination of the first foamable resin, the second foamable resin and the hard plate, when the thermosetting resin is used as one foamable resin and heated to the foaming temperature, it is cured with foaming. Accordingly, even if heated to the foaming temperature of the other foamable resin, the one foamable resin (after foaming) us never melted or foamed.

The melting points of the first formable resin and the second foamable resin are preferably differed to each other. By doing this, since the second foamable resin is never softened even if heated to the foaming temperature in the use of a thermosetting resin as the second foamable resin, the first foamable resin and the second foamable resin can be held in an integrated state without being dropping out from the hard plate, and required sound proofing performance can be obtained after the end of the beating treatment.

Examples of the thermoplastic resin constituting the foamable resin 3a includes polyester, nylon, polyolefin, and the like, and its melting point is preferably 100-260°C since the melting point of polyester terephthalate (PET) is 260-260°C, the smelting point of nylon is 179-260°C, the melting point of polyethylene is 100-140°C, and the melting point of polypropylene is 160-170°C. The foamable resin 3a can be foamed to form the foamed resin 3b by heating to 120-300°C. A thermosetting resin is also usable when its melting point is within the above range, and as the non-foamable resin 4, the above resins can be used in the same manner.

The thermosetting resin to be used can be determined, for use as the foamable resin 3a according to the temperature condition to be used, and is not particularly limited. Polyurethane, thermosetting polyester resin or epoxy resin is preferably used. When the thermosetting resin is used as the foamed resin 3b, its melting point is preferably 100-260°C. The foamable resin 3a can be foamed into the foamed resin 3b by heating to 120-300°C.

The above foaming temperature is preferably set to 120-300 °C. Since the foamable resin in the present invention is apt to deteriorate when heated at a temperature higher than the melting point by about 40°C, it is necessary to set the foaming temperature to not more than a temperature higher than the melting point of the foamable resin by 40°C at the highest. The foamable resin 3a can be foamed without deterioration by heating to 120-300°C.

As described above, the foamed resin laminate sound insulation board 1 of this embodiment comprises the unfoamed foamable resin 3a to be foamed at its foaming temperature by heating and the hard plate 2. The laminated plate is pressed into a prescribed shape as the foamable resin 3a is held in the unfoamed state, and then heated to make the foamable resin 3a to the foamed resin 3b, whereby the thickness can be increased. Therefore, the laminated plate before foaming can be thinned, and pressed into a prescribed shape while ensuring the dimensional and shape precision without restrictions of shape, applicable place and weight as the laminated plate. Further, the rigidity imparting effect or vibration damping performance can be also enhanced by increasing the thickness of the foamable resin 3a by foaming.

In this arrangement the foamed resin laminate sound insulation board 1 precursor comprising the foamable resin 3a, the non-foamable resin 4 and the hard plate 2, are laminated in this order. A foamed resin laminate sound insulation board in which only the formable resin to be foamed at the foaming temperature by heating is laminated and integrated to the hard plate may be prepared. According to this, the laminated plate before foaming can be thinned, and the thickness of the foamable resin 3a is increased by foaming without restrictions of shape, applicable place and weight, whereby the rigidity imparting effect can be enhanced to realize a non-constraining type vibration damping structure capable of exhibiting sufficient vibration damping performance.

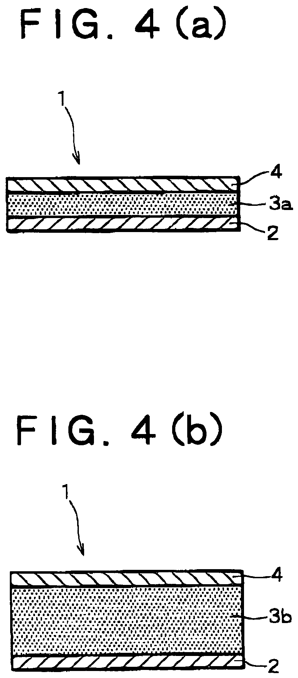

In accordance with the present invention and as shown in Fig. 4(a), the non-foamable material 4, the foamable resin 3a and the hard plate 2 may be laminated and integrated in this order. In accordance with the invention, the non-foamable material is a metal plate or metal foil. The foamable resin 3a is heated to the foaming temperature and made into the foamed resin 3b, whereby the elastic modulus can be reduced as the whole foamed resin 8b. The foamed resin 3b thus plays the role of an air spring in the state interposed between the non-foamable material 4 and the hard plate 2, and a double wall structure can be realized to obtain high sound insulating performance.

When the loss factor of the foamable resin 3a is set to 0.05-5, vibration energy can be sufficiently absorbed to suppress the resonance as the double wall structure in which the non-foamable material 4 and the hard plate 2 is connected to the air spring. Accordingly, high sound insulating performance can be obtained as the double wall structure. The cell dimension is enlarged when the foamable resin 3a is made to the foamed resin 3b, whereby the elastic modulus can be reduced as the whole foamed resin. Even if the cell dimension cannot be enlarged, a resin capable of forming open cells by heating is used as the formable resin 3a, whereby the elastic modulus can be remarkably reduced as the whole foamed resin because cracking is caused between adjacent cells.

Further, since a friction or flow resistance is caused when the internal gas in the bubbles flows in the crack generated between the adjacent cells to convert the vibrating energy of the gas to a thermal energy, the sound absorbing performance can be given. According to this, a foamed resin having open cells is laminated on the surface of the hard plate, whereby a foamed resin laminate sound insulation board enhanced in sound absorbing property can be provided. Further, the foamed resin having open cells is arranged between a non-foamed resin or foamed resin having closed cells and the hard plate, whereby a foamed resin laminate sound insulation board having both excellent vibration damping property and sound insulating property can be provided.

When a lubricant is added to the non-foamable material 4, the contact friction with a metal mold in press molding can be reduced to prevent the rupture of the non-foamable material 4. The same effect can be obtained also by sticking a film exclusive for lubrication to the surface of the non-foamable material 4 or applying a coating for lubrication thereto.

In the above-mentioned manufacturing process of the foamed resin laminate sound insulation board 1, the heating process may be carried out simultaneously with a heating treatment for a baking finish. Since the mechanism or work for the heating process for foaming the foamable resin is dispensed with, the working efficiency can be enhanced to significantly reduce the manufacturing cost.

The size and number of cells can be adjusted according to the material of the foamable resin, the quantity of the foaming gent, the progress of foaming, and the like, whereby the thickness of the foamed resin or the damping performance can be adjusted. These conditions are selected according to the required performance of the laminated plate.

If the foamable resin is heated to the foaming temperature and made into the foamed resin, the elastic modulus as the whole foamed resin can be reduced. Since the foamed resin (the foamable resin after foaming) plays the role of an air spring in the state interposed between the non-foamable material and the hard plate, a double wall structure can be realized to obtain high sound insulating performance.

When the loss factor of the foamable resin is set to 0.05-5, vibration energy can be sufficiently absorbed, and the resonance of the hard plate and the non-foamable resin can be suppresses to obtain sufficient sound insulating performance. The cell dimension is increased when the formable resin is made to the foamed resin, whereby the elastic modulus can be reduced as the whole foamed resin. Even if the cell dimension cannot be increased, a resin capable of forming open cells by heating is used as the foamable resin, whereby the elastic modulus can be remarkably reduced as the whole foamed resin, and the sound absorbing performance can be imparted because cracking is caused between adjacent cells.

When the loss factor of the non-foamable material is set to 0.05-5, vibration energy can be sufficiently absorbed, and high vibration damping performance can be obtained as the retraining type vibration damping structure. When a resin capable of forming closed cells by heating is used as the foamable resin, the reduction in elastic modulus can be confined to a reduction inversely proportional to one power of the foaming magnification even when foamed at a high magnification.

When a metal powder is added to the foamable resin, the sound insulating performance can be enhanced because the density of the resin is increased, and when a conductive material is used, the weldability can be improved. When a lubricant is added to the foamable resin, the contact friction with a metal mold in press molding can be reduced to prevent the rupture of the foamable resin. The same effect can be obtained also by sticking a film exclusive for lubrication to the surface of the foamable resin or applying a coating for lubrication thereto.

The foamable resin can be thermally fused as it is held in the unfoamed state to form the laminated plate.

When a thermoplastic resin is used as the foamable resin, the foamable resin can be sufficiently foamed, when heated to the foaming temperature, since its softening is progressed simultaneously with decomposition and gas generation. Further, a thermosetting resin can be used as the foamable resin.

The foamable resin can be foamed by heating at 120-300°C. Examples of the foamable resin include polyesters, nylons, and polyclofins.

A foaming agent may be mixed to the resin whereby the foamable resin to be foamed by heating can be formed. In order to mix the foaming agent, the melting point of the resin is set preferably lower than the recomposing temperature of the foaming agent by 20-30°C.

The foamable resin can be foamed without deterioration by heating to 120-300°C.

The foamable resin may be made to the foamed resin by heating, and the hard plate is reinforced by the rigidity imparting effect, whereby high vibration damping performance and sound insulating performance can be obtained.

The foamable resin can be laminated and integrated in the laminating process as it is held in the unfoamed state.

The foamable resin may be formed into the foamed resin by heating in the heating process, and the thickness is increased to enhance the bending rigidity, whereby the vibrating damping performance can be enhanced as the retraining type vibration damping structure, or the sound insulating performance can be enhanced as the double wall sound insulating structure by increasing the thickness with foaming to reduce the spring constant. Therefore, the hard plate can be reinforced with the foamed resin, or the vibration damping performance or sound insulating performance as the laminated plate is enhanced, whereby sound proofing performance can be exhibited.

The laminated plate may be made into a prescribed shape by press work or the like in the molding process, and the foamable resin is made to the foamed resin in the heating process. Therefore, the laminated plate can be worked into a prescribed shape while ensuring the dimensional and shape precision without restrictions of shape, applicable place, and weight, and the vibrating damping performance and sound insulating performance can be enhanced to exhibit sound proofing performance.

## Claims

1. A method for manufacturing a foamed resin laminate sound insulation board comprising:
a laminating process for laminating at least an unfoamed foamable resin to be foamed at a foaming temperature by heating between a steel plate or aluminium alloy plate and a metal plate or metal foil;
a process for integrating the laminate of said foamable resin and the hard plate at a temperature lower than the foaming temperature of the foamable resin,
a molding process for working the laminate into a prescribed shape in the integrated state;
and a heating process for heating the laminate to the foaming temperature of said foamable resin to make said foamable resin to a foamed resin.

## Patentansprüche

1. Verfahren zum Herstellen einer Harzschaumlaminatschalldämmplatte, umfassend:
einen Laminierprozess zum Laminieren zumindest eines ungeschäumten schäumbaren Harzes, das Harz geschäumt bei einer Schäumungstemperatur durch Erwärmen zwischen einer Stahlplatte oder Aluminiumlegierungsplatte und einer Metallplatte oder Metallfolie zu schäumen ist;
einen Prozess zum Einbinden des Laminats des schäumbaren Harzes und der harten Platte bei einer Temperatur niedriger als die Schäumungstemperatur des schäumbaren Harzes,
einen Formungsprozess zum Bearbeiten des Laminats in eine vorgeschriebene Form in dem eingebundenen Zustand;
und einen Erwärmungsprozess zum Erwärmen des Laminats auf die Schäumungstemperatur des schäumbaren Harzes, um das schäumbare Harz zu einem geschäumten Harz zu machen.

## Revendications

1. Procédé de fabrication d'un panneau d'isolation acoustique en stratifié de résine expansée comprenant :
un processus de stratification destiné à stratifier au moins une résine expansible non expansée devant être expansée à une température d'expansion par chauffage entre une plaque d'acier ou une plaque d'alliage d'aluminium et une plaque métallique ou une feuille métallique ;
un processus d'intégration du stratifié de ladite résine expansible et de la plaque dure à une température inférieure à la température d'expansion de la résine expansible,
un processus de moulage destiné à travailler le stratifié suivant une forme prescrite dans l'état intégré ;
et un processus de chauffage destiné à chauffer le stratifié à la température d'expansion de ladite résine expansible pour transformer ladite résine expansible en une résine expansée.
